# EUROPEAN PATENT APPLICATION

(11) **EP 3 834 631 A1**
(43) Date of publication of application: **16.06.2021**
(21) Application number: 20020460.0
(22) Date of filing: 06.10.2020
(51) Int. Cl.: A23N 12/02, B08B 1/04, B08B 3/10

(54) **INDUSTRIAL PLANT FOR JERUSALEM ARTICHOKE WASHING**

(30) Priority: 12.12.2019 RO 201900891
(71) Applicant: Institutul National de Cercetare Dezvoltare pentru Masini si Instalatii destinate Agriculturii si Industriei Alimentare-INMA, Bucuresti (RO)
(72) Inventor: Olan, Mihai, Judetul Iasi (RO); Vladut, Nicolae-Valentin, Judetul Ilfov (RO); Paun, Anisoara, Bucuresti (RO); Voicea, Iulian Florin, Judetul Ilfov (RO); Paraschiv, Gigel, Bucuresti (RO); Popa, Diana Lorena, Judetul Neamt (RO); Isticioaia, Simona Florina, 617386 Judetul Neamt (RO); Apostol, Livia, Bucuresti (RO)
(74) Representative: Strenc, Alexandru Cristian

(57) **Abstract**

The invention relates to an industrial plant for washing Jerusalem artichoke tubers to be processed for the production of bioethanol.

The industrial installation consists of a feed tank (**1**) which is provided with a vibrating grate (**2**), driven by a motovibrator (**3**), supported by rubber buffers (**4**) which allows the separation of soil impurities from Jerusalem artichoke tubers before they enter an octagonal tank (**8**) which is constructed of perforated stainless steel sheet and covered with food rubber to prevent the products from hitting during rolling, follwed by a brush washing equipment (**33**) and equipment (**68**) for the final washing and rinsing of the tubers.

## Description

The invention relates to an industrial plant for washing Jerusalem artichoke tubers to be processed for the production of bioethanol.

It is known that in the production of bioethanol from Jerusalem artichoke it is necessary to wash these tubers very well, a difficult operation because of the irregular shape with numerous protrusions in which the soil is stored.

In the present state of the art, it is known the patent US 4063565A, which relates to a water tank for receiving potatoes and a paddle drum which takes over the potatoes from the feed hopper and transports them to the water tank where there is a conveyor which takes over the potatoes and leads them to the adjacent bunker. The washing operation is performed only by this drum with elastic paddles.

Patent EP 343756A1 is also known, which relates to a feeding part provided with a conveyor which performs the pre-soaking operation and leads them to the washing area provided with a spiral which then evacuates the potatoes from this plant.

Patent RU (11) 2 546 182(13) C1, 2013 is also known, which relates to an installation for washing, sorting, cleaning, cutting into cubes and then drying in two stages the Jerusalem artichoke.

The disadvantages of these installations consist in the partial washing of the Jerusalem artichoke tubers which have irregular shapes with protrusions that cannot be cleaned of mud by the classic washing systems.

The plant, according to the invention, consists of a tank with a vibrating grate which is fed with Jerusalem artichoke tubers and due to the actuation of a motovibrator, which is rigidly fastened to the vibrating grate, the primary sorting of impurities attached to the tubers occurs. From the vibrating grate, these Jerusalem artichoke tubers reach the octagonal tank made of perforated stainless-steel sheet, which rotate at low speed in a water bath to perform the primary washing of the tubers. At the lower part of the tank in the case of this primary washing equipment enters the end of a woven wire conveyor with scrapers, which takes over the tubers transporting them in the tank to a brush washing equipment, and from here another conveyor directs them to an equipment with horizontal shafts fitted with special profile bushes for slow movement, but also for the rotation of Jerusalem artichoke tubers. Above this equipment, there are pipes with water spray nozzles that perform the final washing and rinsing of the products. Due to this complete technological flow that includes: vibration, primary washing, brush washing and final washing with rinsing of the products, the qualitative realization of this technological operation of washing the Jerusalem artichoke tubers that can be used in the production of bioethanol is ensured.

The technical problem solved by the invention consists in the design of a plant comprising all the technological operations for washing Jerusalem artichoke tubers. As they are harvested in autumn, in the rainy season, it is necessary for the technological flow to include a vibrating grate for primary cleaning of impurities, then tubers reach the soaking and prewashing area and, finally, the final washing area with cylindrical brushes and rinsing.

The plant for Jerusalem artichoke washing eliminates the disadvantages of the known solutions and solves the technical problem proposed, by the fact that it consists of a tank with a vibrating grate that is driven by an electric motovibrator, this vibrating grate being mounted on four rubber buffers, the Jerusalem artichoke fed and cleaned of mud by vibration is discharged into a rotating drum with octagonal perforated holes that rotates in a water bath and then the Jerusalem artichoke tubers are taken over by an inclined conveyor and transported to an equipment having cylindrical brushes mounted on a semicircle. These brushes have cleaning fibres about 5 cm long allowing access and cleaning of the spaces between the protrusions of Jerusalem artichoke tubers. After this technological stage, the tubers are taken over by an inclined conveyor and directed in a tank with successive shafts with rubber elements that ensure slow movement but also rotate the products to perform the final washing and rinsing operations.

All these technological steps ensure the optimal washing of Jerusalem artichoke tubers which are harvested together with a large amount of mud in the autumn which is a rainy season. The plant is recommended to be applied in the industrial field.

The industrial plant for Jerusalem artichoke washing, according to the invention, has the following advantages:
- it is easy to make and assemble;
- it becomes operational in a short time;
- it has a robust and safe construction that works without blockages;
- it allows washing the Jerusalem artichoke tubers at the established parameters.

An embodiment of the invention is shown in connection with Figures 1-8 which represent:
- Fig. 1 - Industrial plant for Jerusalem artichoke washing - lateral view;
- Fig. 2 - Industrial plant for Jerusalem artichoke washing - A-A section;
- Fig. 3 - Industrial plant for Jerusalem artichoke washing - B-B section;
- Fig. 4 - Industrial plant for Jerusalem artichoke washing - C-C section;
- Fig. 5 - Industrial plant for Jerusalem artichoke washing - D detail.

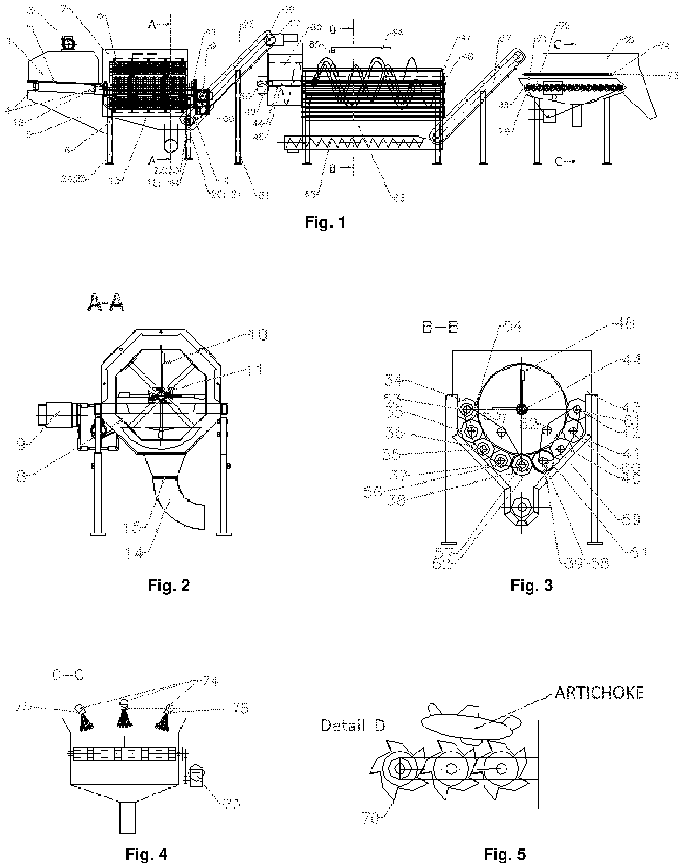

The industrial plant for Jerusalem artichoke washing, according to the invention presented in Figures 1-5, consists of a feed tank (**1**) provided with a grate (**2**) which is driven by an electric motovibrator (**3**), the grate (2) being supported by rubber buffers (**4**) which are mounted on the support (**5**) rigidly fastened at the front part to the chassis (**6**) of the plant (**7**) for primary washing. Jerusalem artichoke tubers are transported on the vibrating grate (**2**) which separates the products from the impurities collected during harvesting. Due to the inclination of the grate and the actuation of the electric motovibrator, the Jerusalem artichoke tubers reach the octagonal tank (**8**) which rotates very slowly and is driven by the gear motor (**9**) by means of a radial paddle shaft (**10**), which is positioned with bearings (**11**) and (**12**). The octagonal tank (**8**) is made of stainless steel and is covered with food rubber in order to attenuate the impact of the tubers during operation. Under the octagonal tank (**8**) is mounted the housing (**13**) rigidly fastened to the chassis (**6**) which is filled with water up to a certain level to perform the primary washing of the tubers. The housing (**13**) has at the lower part a discharge hole (**14**) and an open-close valve (**15**).

Inside the housing (**13**) enters the end of an inclined conveyor (**16**) which is driven by a worm gear motor (**17**) and takes over the tubers which are unloaded from the octagonal tank (**8**). To make the tubers advance when rotating the octagonal housing (**8**) it is necessary that the whole assembly be inclined at a small angle, which is adjusted by means of the legs (**18**) and (**19**) formed by two elements which are provided with channels (**20**) and (**21**) on the right side and the legs are fixed in position by using screws (**22**) and (**23**), and on the left side the plant (**7**) has two articulated legs (**24**) and (**25**) which allow rotation at a certain angle so that the soles of the legs (**26**) and (**27**) get correctly in contact with the floor of the production hall.

The inclined conveyor (**16**) is made of a woven wire conveyor belt (**28**) which is mounted on the drums (**29**) and (**30**) and is driven by the worm gear motor (**17**). The conveyor belt is supported by the legs (**31**). After a period of time in which the tubers rotate in the plant (**7**), they are transported in the tank (32) of the washing equipment (**33**) with cylindrical brushes (**34**), (**35**), (**36**), (**37**), (**38**), (**39**), (**40**), (**41**) and (**42**) mounted in the housing (**43**) and which is provided with the shaft (**44**) having a sheet metal spiral (**45**)) for transporting tubers and a pipe coil (**48**) which transports them by slow rotation, then the spiral (**47**) with very slow rotation above these cylindrical brushes allowing slow movement and rotation with the help of bucket arms (**46**) and complete washing of Jerusalem artichoke tubers. The shaft (**44**) is positioned by means of bearings and is driven by a gear motor (**50**).

In order to correctly rotate the cylindrical brushes which are positioned by means of bearings which are not shown in the drawing, it is necessary to mount at the end of the cylindrical brushes (**38**) and (**39**) some cylindrical gears (**51**) and (**52**) which allow changing the direction of rotation and in order for the brushes (**36**), (**37**), (**38**), (**39**) to have the same direction of rotation it will be necessary for them to be driven by Gall chain transmissions (**53**), (**54**), (**55**) and (**56**) and the other cylindrical brushes (**40**), (**41**), (**42**), (**43**) will have the same direction of rotation between them but different from the group of brushes (**36**) - (**39**) and this is made by using pinion and Gall chain (**58**), (**59**), (**60**) and (**61**) transmissions.

The washing equipment (**33**) is provided with a metal housing (**63**) in which water for washing is filled by means of a pipe (**64**) and a tap (**65**) and at the lower part of the metal housing (**63**) is mounted a screw (**66**) for transporting mud and impurities resulting from the washing operation. An inclined conveyor (**67**) similar to the conveyor (**16**) is mounted on the right side of the metal housing (**63**). The inclined conveyor (**67**) takes over the tubers and directs them to an equipment (**68**) for their final washing and rinsing.

This equipment (**68**) consists of shafts (**69**) on which are mounted food rubber or Teflon rollers which have a special shape (**70**), (fig. 5), which allow by their rotation to achieve the slow advancement of the tubers but also their rotation. The shafts (**69**) are driven in the direction of advance of the washed products by means of Gall chain sprockets (**71**), a Gall chain transmission (**72**) and which receives the rotational movement from an electric gear motor (**73**).

Above the shafts (**69**) are mounted water pipes (**74**) provided with nozzles (**75**) spraying water, thus taking place the final washing and rinsing of the tubers.

Below the shafts (**69**), the tank (**76**) is mounted for collecting water which is then filtered and recirculated in the prewashing (**7**) and washing (**33**) equipment in order to save water.

## Claims

1. Industrial plant for Jerusalem artichoke washing according to the invention, **characterized by the fact that,** it consists of a feed tank (**1**) which is provided with a vibrating grate (**2**), driven by a motovibrator (**3**), supported by rubber buffers (**4**) which allows separating soil impurities from Jerusalem artichoke tubers before they enter the octagonal tank (**8**) which is made of perforated stainless steel sheet and covered with food rubber to prevent the products from hitting during rolling, then the washing equipment (**33**) with brushes and equipment (**68**) for final washing and rinsing of tubers.

2. Industrial plant for Jerusalem artichoke washing, according to claim 1, **characterized by the fact that** the washing equipment (**33**) contains cylindrical brushes (**34**) - (**42**), of which the first 4 brushes (**34**) - (**37**) rotate in a direction and 5 brushes (**38**) - (**42**) rotate in a different direction due to the use of a pair of cylindrical gears (**51**) and (**52**) rigidly fastened to the brushes (**37**) and (**38**), which cause by gearing the change in the direction of rotation of these brushes and then, by the Gall chain transmissions starting from the chain gears rigidly fastened to the brush shafts, the transmission of the rotational movement to **4** other brushes mounted on the side of brushes (**37**) and (**38**), and the spiral (**47**) which determines by rotation the movement of the products in the direction of advance of the equipment has an alternating movement to move the tubers forwards or backwards and thus to increase the washing time.

3. Industrial plant for Jerusalem artichoke washing, according to claim 1, **characterized by the fact that** the equipment (**68**) for final washing and rinsing of the tubers consists of shafts (**69**) containing the roller system (**70**) with specially shaped teeth which allow both advancing the tubers but also rotating them, so that the final washing and rinsing takes place on all surfaces.
